# FASCICULE DE BREVET EUROPEEN

(11) **EP 1 161 054 B1**
(45) Date de publication et mention de la délivrance du brevet: **28.12.2005**
(21) Numéro de dépôt: 01401285.0
(22) Date de dépôt: 17.05.2001
(51) Int. Cl.: H04L 29/06, H04Q 7/30

(54) **Procédé de transfert avec traitement de signaux entr deux interfaces d'émission/reception distinctes**
Übertragungsverfahren mit Signalverarbeitung zwischen zwei unterschiedlichen Übertragungs/Empfangs-Schnittstellen
Transmission process with signal processing between two distinct transmission/reception interfaces

(30) Priorité: 30.05.2000 FR 0006955
(43) Date de publication de la demande: 05.12.2001
(73) Titulaire: ALCATEL, 75008 Paris (FR)
(72) Inventeur: Redondo, Frédéric, 92330 Sceaux (FR); Desblancs, Philippe, 75015 Paris (FR)
(74) Mandataire: Sciaux, Edmond

(56) Documents cités:
- WO-A-99/13664
- WO-A-99/40742
- US-A- 5 878 343

## Description

La présente invention concerne le domaine de la transmission de signaux entre deux interfaces d'émission / réception, en particulier de signaux audio, et a pour objet un procédé de transfert avec traitement de signaux informatifs entre deux interfaces distinctes, présentant un temps de transit optimisé, ainsi qu'un dispositif de communication mettant en oeuvre ce procédé.

Dans de nombreux systèmes de communication, notamment des équipements de télécommunication, il est nécessaire de mettre en relation au moins deux interfaces d'émission / réception, en vue de la mise en communication de stations d'un même réseau ou de deux réseaux différents, présentant des formats de données informatives utiles similaires, voire identiques.

Dans ces situations, les traitements auxquels sont soumises les données à transmettre entraînent généralement des retards à l'acheminement qui peuvent être incompatibles avec une mise en communication bidirectionnelle en temps réel ou quasi temps réel, telle qu'elle est requise pour une liaison téléphonique ou visiophonique.

Or, les solutions existantes consistent à régénérer complètement le signal en effectuant la totalité des traitements sur la totalité du signal, c'est-à-dire aussi bien sur les données de signalisation que sur les données utilisateurs. Le retard induit sur les données utilisateurs devient rédhibitoire pour l'utilisateur et son confort d'écoute en mode vocal dans le cas où plusieurs traversées de ce type d'équipement sont cascadées, puisque les retards induits viennent s'ajouter les uns aux autres.

Le document WO 99 13664 décrit un système, qui amène bien à la solution du problème, mais ce système applique aussi des opérations de (de)modulation aux données utilisateurs et donc est plus lente.

Le but recherché par la présente invention consiste à proposer une solution simple permettant d'optimiser les contraintes de temps dans la mise en communication et le transfert de données entre deux interfaces, sans modification matérielle de ces dernières ou du système intégrant ces dernières, ni modification substantielle des opérations de traitement appliquées aux signaux reçus et émis ou aux données à transférer et sans nécessiter d'opérations de traitement spécifiques supplémentaires.

A cet effet, la présente invention a pour objet un procédé de transfert avec traitement de signaux informatifs entre deux interfaces d'émission / réception distinctes faisant partie d'un même dispositif de communication, les deux interfaces utilisant, au moins pour les données informatives utiles aux utilisateurs ou données utilisateur, des protocoles et des structures de transmission, et notamment des formats, similaires et réalisant, pour un signal entrant déterminé, des séquences d'opérations de traitement opposées, l'une des interfaces transformant les données modulées en données en bande de base et l'autre transformant lesdites données en bande de base en données modulées, ou vice versa, caractérisé en ce qu'il consiste :
- à différencier les données utilisateurs et les données de signalisation ;
- à appliquer l'ensemble des opérations de traitement aux données de signalisation pour permettre leur interprétation par chacune des interfaces ;
- à appliquer aux données utilisateurs uniquement les opérations de traitement nécessaires à leur transfert d'une première interface à la seconde interface, sans restitution ou reconstitution, ni interprétation, de leur contenu.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est un schéma synoptique représentant deux séquences d'opérations de traitement pouvant être appliquées aux données de signalisation lors de la mise en communication de deux réseaux de télécommunication radiofréquence ;
la figure 2 est un schéma synoptique représentant deux séquences d'opérations de traitement appliquées selon l'invention aux données utilisateurs, lorsque les deux séquences d'opérations de traitement de la figure 1 sont appliquées aux données utilisateurs ;
la figure 3 est une représentation schématique montrant la mise en communication à l'aide d'un dispositif selon l'invention d'un réseau local de téléphonie sans fil avec un réseau de télécommunication cellulaire, et,
la figure 4 est une représentation schématique montrant la mise en communication par l'intermédiaire d'un dispositif selon l'invention de deux stations mobiles d'un réseau de télécommunication cellulaire.

Comme indiqué précédemment, l'invention concerne un procédé de transfert avec traitement de signaux informatifs entre deux interfaces 1, 1' d'émission / réception distinctes faisant partie d'un même dispositif de communication 2, les deux interfaces 1, 1' utilisant, au moins pour les données informatives utiles aux utilisateurs ou données utilisateur, des protocoles et des structures de transmission, et notamment des formats, similaires et réalisant, pour un signal entrant déterminé, des séquences d'opérations de traitement opposées, l'une des interfaces transformant les données modulées en données en bande de base et l'autre transformant lesdites données en bande de base en données modulées, ou vice versa.

Conformément à l'invention, le procédé consiste :
- à différencier les données utilisateurs et les données de signalisation ;
- à appliquer l'ensemble des opérations de traitement aux données de signalisation pour permettre leur interprétation par chacune des interfaces 1 et 1';
- à appliquer aux données utilisateurs uniquement les opérations de traitement nécessaires à leur transfert d'une première interface 1 ou 1' à la seconde interface 1' ou 1, sans restitution ou reconstitution, ni interprétation, de leur contenu.

Ainsi, le principe de base de l'invention repose sur la différentiation des données de signalisation et des données utilisateur pour n'appliquer que le traitement minimum sur les données utilisateur indépendamment du traitement des données de signalisation qui lui reste effectué de façon complète pour permettre la gestion des deux interfaces radio. Le temps de transit des données utilisateur dans l'équipement est ainsi optimisé.

L'invention tire par conséquent partie du format similaire des données utilisateur sur les deux interfaces radio pour limiter le traitement qui leur est appliqué et, de ce fait, le temps de retard qui est induit par leur transmission dans cet équipement.

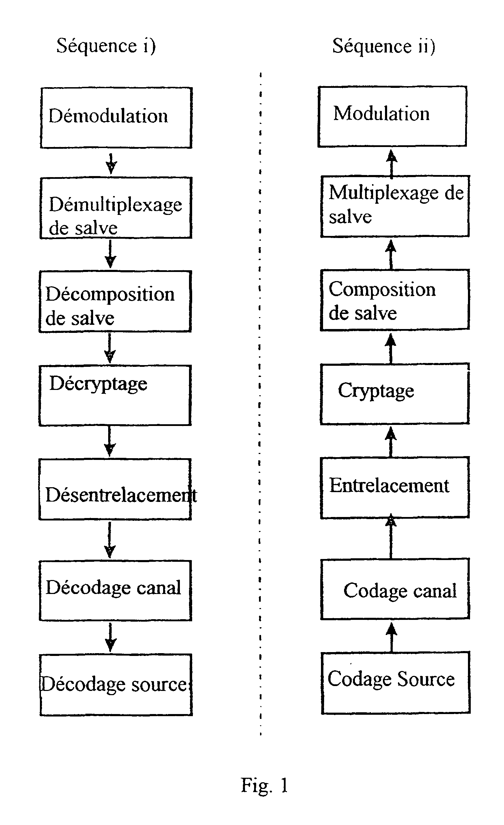

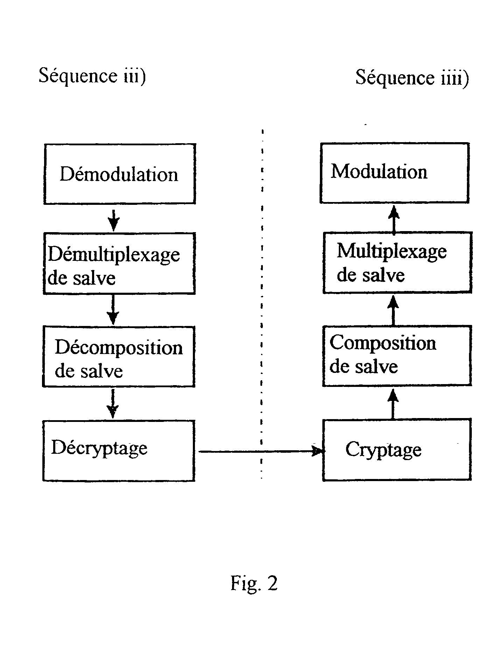

Les figures 1 et 2 des dessins annexés représentent, sous forme d'ordinogrammes, les suites d'opérations de traitement applicables lors du transfert de données entre deux interfaces 1, 1' d'émission / réception radiofréquence.

En effet, dans le cadre d'une telle application, lorsque les deux séquences d'opérations de traitement i) et ii) suivantes sont appliquées aux données de signalisation :
i) démodulation / démultiplexage de salves / décomposition de salves / éventuel décryptage / désentrelacement de données / décodage canal des données / décodage source
ii) codage source / codage canal / entrelacement des données codées / éventuel cryptage / composition de salves / multiplexage de salves / modulation
   seules les suites restreintes iii) et iiii) suivantes d'opérations de traitement sont appliquées aux données utilisateurs :
iii) démodulation / démultiplexage de salves / décomposition de salves / éventuel décryptage
iiii) éventuel cryptage / composition de salves / multiplexage de salves / modulation
   par les interfaces 1 et 1' concernées.

Il est indiqué ci-après, de manière sommaire, la nature et le but des fonctions mentionnées ci-dessus.

La fonction démodulation de la chaîne de transmission ou de la séquence de traitement i) ou iii) consiste à transformer le signal radiofréquence analogique reçu en provenance de l'antenne en un train binaire en bande de base sous forme numérique.

La fonction démultiplexage de salves (ou "bursts") de la séquence de traitement i) ou iii) consiste à réaliser l'aiguillage des salves en fonction de la nature des informations ou données qu'elles contiennent et donc en fonction du numéro de trame (FN) de la trame correspondante.

La fonction décomposition de salves consiste à extraire les bits de données chiffrés et encodés de l'ensemble des bits d'un salve normal (notamment par dissociation des bits de traînée et des bits de la séquence d'apprentissage).

Dans le cas où les données transmises sont chiffrées, la fonction décryptage (séquence i) et iii)) consiste à réaliser une opération logique (ou exclusif) entre les données reçues et une séquence pseudo-aléatoire fournie par l'algorithme de chiffrement. Cette séquence pseudo-aléatoire est en particulier fonction du sens de la liaison mais aussi du numéro FN de trame et de la clé de session Kc.

La fonction de désentrelacement (séquence i)) des données reçues consiste à réordonner les données déchiffrées.

La fonction décodage canal (séquence i)) des données consiste à recalculer les bits constitutifs du bloc de parole initialement émis par le système à partir des bits régénérés suite au traitement du signal reçu. Cette fonction nécessite des calculs importants.

La fonction décodage de la source audio (séquence ii)) consiste à régénérer les 20 ms de signal analogique audio (signal appliqué au Haut Parleur) à partir des bits restitués après le décodage canal.

La fonction codage de la source audio de la séquence de traitement ii) est la fonction duale de la fonction décodage de la source audio. Cette fonction réalisée par le vocoder ou synthétiseur vocal consiste à coder 20 ms de parole enregistrés par le microphone sous forme d'un nombre déterminé de bits pour constituer un bloc de parole.

La fonction codage canal (séquence ii)) est la fonction duale de la fonction décodage canal. Cette fonction consiste à calculer les bits constituant le bloc de parole protégé (en fonction des différentes classes de protection) à partir des bits fournis par le vocoder.

La fonction entrelacement des données codées est la fonction duale de la fonction désentrelacement.

La fonction cryptage des séquences ii) et iiii) est la fonction duale de la fonction décryptage. Cette fonction consiste à appliquer l'algorithme de chiffrement aux données codées protégées avec les paramètres relatifs à la liaison radio du système considéré.

La fonction composition d'un salve ou burst est la fonction duale de la fonction décomposition d'une salve ou "burst".

La fonction multiplexage des bursts est la fonction duale de la fonction démultiplexage de salves ou "burst".

La fonction modulation est la fonction duale de la fonction démodulation. Cette fonction consiste à générer le signal analogique radio à partir des données binaires pour en réaliser l'émission sur l'interface air conformément aux paramètres relatifs à l'interface air utilisée par le système (fréquence, puissance...)

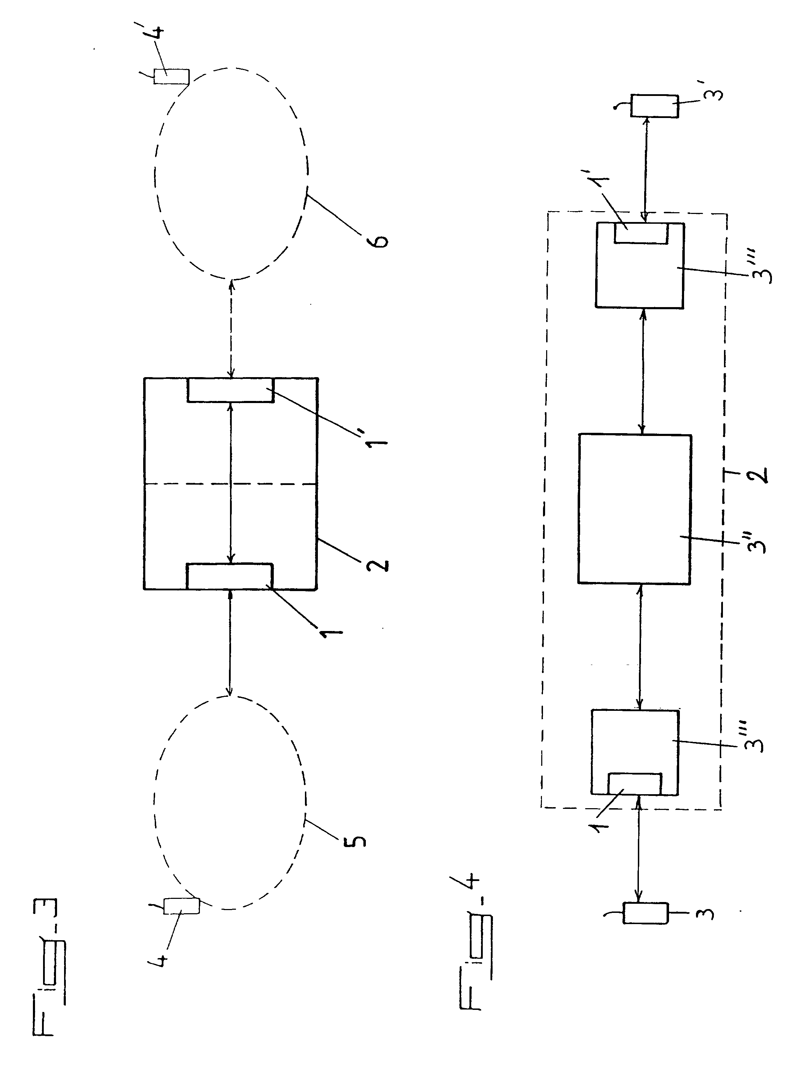

Selon un premier mode de réalisation de l'invention, représenté à la figure 3 des dessins annexés, les deux interfaces 1 et 1' consistent en des interfaces radio, l'une étant une interface radio pour un réseau local de téléphonie sans fil 5, par exemple du type connu sous la désignation CTS, et l'autre étant une interface radio pour un réseau 6 de télécommunication cellulaire pour stations / mobiles 4, tel que par exemple un réseau du type connu sous la désignation GSM, lesdites interfaces 1, 1' faisant partie de la station de base fixe 2 du réseau local de téléphonie sans fil 5.

Pour l'implémentation du réseau local CTS, l'homme du métier pourra notamment se reporter aux recommandations n° 02.56, 03.56 et 05.56 (Versions 1999) de l'ETSI, les réseaux GSM ("Global System for Mobile communication", système global pour communication mobile) étant quant à eux bien connus.

Selon un second mode de réalisation de l'invention, représenté à la figure 4 des dessins annexés, les deux interfaces 1 et 1' consistent en des interfaces radio faisant partie d'un dispositif de communication comprenant également un contrôleur 3" de centres émetteur-récepteur ou stations de base 3"' d'un réseau de radiocommunication comprenant des stations de base fixes 3"' réparties sur un territoire donné et une pluralité de stations mobiles 3', telles que des téléphones cellulaires.

On notera que, indépendamment de la nature des données utilisateurs transmises (parole, textes, images, ...) et de la séquence d'opérations de traitement ou chaîne de transmission utilisée, les données de signalisation doivent être complètement décodées et interprétées par chacune des interfaces 1 et 1'. Le fonctionnement de la chaîne complète est donc maintenu pour réaliser, par exemple dans le cas de la télécommunication radio, le traitement standard sur les données de signalisation contenues dans le canal SACCH (canal de contrôle lent associé) mais aussi dans le canal TCH (canal de traffic) dans le cas de FACCH (canal de contrôle rapide associé).

Afin de pouvoir autoriser la mise en oeuvre de certaines fonctionnalités de communication nécessitant une restitution complète des données utilisateur au niveau du dispositif de communication 2, il peut être prévu que l'application des suites restreintes d'opérations de traitement aux données utilisateurs soit fonction de l'état activé ou désactivé d'une telle fonctionnalité de communication nécessitant des opérations additionnelles spécifiques sur les données utilisateurs restituées ou reconstituées.

Ainsi, la mise en oeuvre des suites restreintes d'opérations de traitement iii) et iiii), formant une chaîne de transmission fonctionnelle optimisée en temps de transfert, ne permet pas, à titre d'exemple, de disposer de la fonctionnalité de la conférence à trois.

En effet, dans le cas du premier mode de réalisation indiqué ci-dessus, cette fonctionnalité met en relation deux mobiles CTS avec un correspondant distant au travers d'une liaison GSM. Pour pouvoir proposer cette fonctionnalité, il faut pouvoir effectuer des opérations linéaires sur les signaux de paroles des trois liaisons prises deux à deux, ce qui nécessite à minima d'effectuer l'ensemble des traitements sur les différents signaux qui correspondent à des opérations non linéaires, en particulier le décodage canal. En excluant son implémentation dans le réseau GSM, cette fonctionnalité ne peut être proposée que si la chaîne de transmission comprend le module ou la fonction de décodage canal.

Plutôt que d'imposer en permanence l'ensemble des traitements nécessaires pour cette fonctionnalité de conférence à trois et d'induire un temps de traitement et de transfert à travers l'équipement long, la disposition suivante peut être envisagée :
- quand la fonctionnalité de conférence à trois n'est pas activée, la chaîne de transmission utilisée correspond à la chaîne de transmission optimisée en temps de transfert et,
- quand la fonctionnalité de conférence à trois est activée, la chaîne de transmission complète (jusqu'à la régénération par le vocodeur, avec le décodage parole et les opérations linéaires sur les signaux audio) est utilisée ; dans ce cas, une commutation de mode de fonctionnement est effectuée et la dégradation du temps de transfert induite doit être tolérée.

Par conséquent, le temps de transfert long n'affecte les données utilisateur transmises que si la fonctionnalité de conférence à trois est activée, en appliquant aux données utilisateur les séquences d'opérations de traitement complètes par ailleurs systématiquement appliquées aux données de signalisation. L'activation-désactivation de la fonctionnalité de conférence à trois s'effectue au travers de la commutation de la chaîne de transmission des données utilisateur entre les deux modes de fonctionnement.

On notera également que du fait de l'application de suites restreintes d'opérations de traitement aux données utilisateur aucun traitement de correction d'erreur n'est effectué sur ces dernières et le codage canal doit être suffisamment robuste pour supporter le cumul des erreurs générées au niveau des deux interfaces 1 et 1'.

Toutefois, il existe généralement dans les stations de base fixes 3"' des réseaux de radiocommunication cellulaire des traitements algorithmiques d'adaptation de liens avec les mobiles. Ce traitement, basé sur la mesure du taux d'erreur (BER) en provenance d'un mobile et permettant à la station de base considéré d'adapter ses paramètres radio pour obtenir en permanence un taux d'erreur minimal sur l'interface de liaison avec le mobile concerné, pourrait être mis en oeuvre par transposition dans le cadre de la présente invention si nécessaire.

La présente invention a également pour objet un dispositif de communication intégrant au moins deux interfaces d'émission / réception distinctes, lesdites deux interfaces utilisant, au moins pour les données informatives utiles aux utilisateurs ou données utilisateur, des protocoles et des structures de transmission, et notamment des formats, similaires et réalisant, pour un signal entrant déterminé, des séquences d'opérations de traitement opposées, l'une des interfaces transformant les données modulées en données en bande de base et l'autre transformant lesdites données en bande de base en données modulées, ou vice versa, dispositif caractérisé en ce que le transfert des signaux informatifs entre lesdites deux interfaces 1 et l'est réalisé selon le procédé tel que décrit ci-dessus.

Selon un mode de réalisation avantageux de l'invention, les deux interfaces 1 et 1' consistent en des interfaces radio, assurant la transmission entre des stations 3, 3', d'un même réseau ou entre des stations 4, 4' de deux réseaux différents 5, 6.

Conformément à deux variantes de réalisation préférées, ledit dispositif de communication 2 peut soit comprendre un contrôleur 3" de centres émetteur-récepteur ou stations de base, contrôlant au moins deux stations de base 3"' d'un réseau de radiocommunication cellulaire comprenant des stations de base fixe 3"' réparties sur un territoire donné et une pluralité de stations mobiles 3', telles que des téléphones cellulaires (Fig. 3), soit consister en une station de base fixe 2 d'un réseau local 5 de téléphonie sans fil, par exemple du type connu sous la désignation CTS, l'une des interfaces 1 assurant la liaison avec la ou les station(s) mobile(s) 4 dudit réseau local 5 et l'autre interface 1' assurant la liaison avec une ou plusieurs station(s) fixe(s) ou mobile(s) 4' d'un réseau de télécommunication cellulaire 6, tel que par exemple un réseau du type connu sous la désignation GSM (Fig. 4).

## Revendications

1. Procédé de transfert avec traitement de signaux informatifs entre deux interfaces d'émission / réception (1, 1') distinctes faisant partie d'un même dispositif de communication, les deux interfaces (1, 1') utilisant, au moins pour des données informatives utiles aux utilisateurs ou données utilisateur, des protocoles et des structures de transmission, et notamment des formats, similaires et réalisant, pour un signal entrant déterminé, des séquences d'opérations de traitement opposées, l'une des interfaces (1,1') transformant des données modulées en données en bande de base et l'autre transformant lesdites données en bande de base en données modulées, ou vice versa, **caractérisé en ce qu'**il consiste :
- à différencier les données utilisateurs et les données de signalisation ;
- à appliquer l'ensemble des opérations de traitement aux données de signalisation pour permettre leur interprétation par chacune des interfaces (1 et 1') ;
- à appliquer aux données utilisateurs uniquement les opérations de traitement nécessaires à leur transfert d'une première interface (1 ou 1') à la seconde interface (1' ou 1), sans restitution ou reconstitution, ni interprétation, de leur contenu.

2. Procédé selon la revendication 1, **caractérisé en ce que**, lorsque les deux séquences d'opérations de traitement i) et ii) suivantes sont appliquées aux données de signalisation :
i) démodulation / démultiplexage de salves / décomposition de salves / éventuel décryptage / désentrelacement de données / décodage canal des données / décodage source
ii) codage source / codage canal / entrelacement des données codées / éventuel cryptage / composition de salves / multiplexage de salves / modulation
seules les suites restreintes iii) et iiii) suivantes d'opérations de traitement sont appliquées aux données utilisateurs :
iii) démodulation / démultiplexage de salves / décomposition de salves / éventuel décryptage
iiii) éventuel cryptage / composition de salves / multiplexage de salves / modulation
par les interfaces (1 et 1') concernées.

3. Procédé selon la revendication 2, **caractérisé en ce que** l'application des suites restreintes d'opérations de traitement aux données utilisateurs est fonction de l'état activé ou désactivé d'une fonctionnalité de communication nécessitant des opérations additionnelles spécifiques sur les données utilisateurs restituées ou reconstituées.

4. Procédé selon l'une quelconque des revendications 1 à 3, **caractérisé en ce que** les deux interfaces (1 et 1') consistent en des interfaces radio, l'une étant une interface radio pour un réseau local de téléphonie sans fil (5) et l'autre étant une interface radio pour un réseau (6) de télécommunication cellulaire pour stations / mobiles (4), tel que par exemple le réseau connu sous la désignation GSM, lesdites interfaces (1, 1') faisant partie de la station de base fixe (2) du réseau local de téléphonie sans fil (5).

5. Procédé selon l'une quelconque des revendications 1 à 3, **caractérisé en ce que** les deux interfaces (1 et 1') consistent en des interfaces radio faisant partie d'un dispositif de communication comprenant également un contrôleur (3") de centres émetteur-récepteur ou stations de base (3''') d'un réseau de radiocommunication comprenant des stations de base fixes (3"') réparties sur un territoire donné et une pluralité de stations mobiles (3'), telles que des téléphones cellulaires.

6. Dispositif de communication intégrant au moins deux interfaces d'émission / réception (1,1') distinctes, lesdites deux interfaces (1,1') utilisant, au moins pour des données informatives utiles aux utilisateurs ou données utilisateur, des protocoles et des structures de transmission, et notamment des formats, similaires et réalisant, pour un signal entrant déterminé, des séquences d'opérations de traitement opposées, l'une des interfaces (1,1') transformant les données modulées en données en bande de base et l'autre transformant lesdites données en bande de base en données modulées, ou vice versa, dispositif **caractérisé en ce que** le transfert des signaux informatifs entre lesdites deux interfaces (1 et 1') est réalisé selon le procédé suivant l'une quelconque des revendications 1 à 5.

7. Dispositif de communication selon la revendication 6, **caractérisé en ce que** les deux interfaces (1 et 1') consistent en des interfaces radio, assurant la transmission entre des stations (3, 3'), d'un même réseau ou entre des stations (4, 4') de deux réseaux différents (5, 6).

8. Dispositif de communication selon la revendication 7, **caractérisé en ce qu'**il comprend un contrôleur (3") de centres émetteur-récepteur ou stations de base, contrôlant au moins deux stations de base (3"') d'un réseau de radiocommunication cellulaire comprenant des stations de base fixe (3"') réparties sur un territoire donné et une pluralité de stations mobiles (3'), telles que des téléphones cellulaires.

9. Disposition de communication selon la revendication 7, **caractérisé en ce qu'**il consiste en une station de base fixe (2) d'un réseau local (5) de téléphonie sans fil, par exemple du type connu sous la désignation CTS, l'une des interfaces (1) assurant la liaison avec la ou les station(s) mobile(s) (4) dudit réseau local (5) et l'autre interface (1') assurant la liaison avec une ou plusieurs station(s) fixe(s) ou mobile(s) (4') d'un réseau de télécommunication cellulaire (6), tel que par exemple un réseau du type connu sous la désignation GSM.

## Patentansprüche

1. Übertragungsverfahren mit Informationssignalverarbeitung zwischen zwei unterschiedlichen Übertragungs- / Empfangs-Schnittstellen (1, 1'), die zu einer selben Kommunikationseinrichtung gehören, wobei die zwei Schnittstellen (1, 1') zumindest für von Benutzern genutzte Informationsdaten oder Nutzdaten ähnliche Protokolle und Übertragungsstrukturen und insbesondere Formate verwenden und für ein bestimmtes ankommendes Signal entgegengesetzte Sequenzen von Verarbeitungsschritten ausführen, wobei die eine der Schnittstellen (1, 1') modulierte Daten in Basisbanddaten umwandelt und die andere diese Basisbanddaten in modulierte Daten umwandelt und umgekehrt, **dadurch gekennzeichnet, dass** es darin besteht:
- die Nutzdaten und die Signalisierun zu unterscheiden;
- sämtliche Verarbeitungsschritte auf die Signalisierungsdaten anzuwenden, um ihre Interpretation durch jede der Schnittstellen (1 und 1') zu ermöglichen;
- auf die Nutzdaten ausschließlich die für ihre Übertragung von einer ersten Schnittstelle (1 oder 1') zur zweiten Schnittstelle (1' oder 1) benötigten Verarbeitungsschritte anzuwenden, ohne Rekonstruktion oder Wiederherstellung und auch ohne Interpretation ihres Inhalts.

2. Verfahren nach Anspruch 1, **dadurch gekennzeichnet, dass** dann, wenn die beiden folgenden Verarbeitungsschrittsequenzen i) und ii) auf die Signalisierungsdaten angewendet werden, und zwar:
i) Demodulation / Demultiplexen der Bursts / Zerlegen der Bursts / eventuelle Entschlüsselung / Auflösen der Datenverschachtelung / Kanaldecodierung der Daten / Quellendecodierung;
ii) Quellencodierung / Kanalcodierung / Verschachteln der codierten Daten / eventuelle Verschlüsselung / Zusammenstellen der Bursts / Multiplexen der Bursts / Modulation
nur die folgenden verkürzten Folgen iii) und iiii) der Verarbeitungsschritte von den betroffenen Schnittstellen 1 und 1' auf die Nutzdaten angewendet:
iii) Demodulation / Demultiplexen der Bursts / Zerlegen der Bursts / eventuelle Entschlüsselung;
iiii) eventuelle Verschlüsselung / Zusammenstellen der Bursts / Multiplexen der Bursts / Modulation.

3. Verfahren nach Anspruch 2, **dadurch gekennzeichnet, dass** die Anwendung der verkürzten Verarbeitungsschrittfolgen auf die Nutzdaten davon abhängt, ob eine Kommunikationsfunktionalität, die zusätzliche besondere Verarbeitungsschritte an den rekonstruierten oder wiederhergestellten erfordert, aktiviert oder deaktiviert ist.

4. Verfahren nach einem beliebigen der Ansprüche 1 bis 3, **dadurch gekennzeichnet, dass** die zwei Schnittstellen (1 und 1') aus Funkschnittstellen bestehen, wobei die eine eine Funkschnittstelle für ein lokales drahtloses Telefonnetz (5) ist und wobei die andere eine Funkschnittstelle für ein zellulares Telekommunikationsnetz (6) für Stationen / Mobiltelefone 4 ist, wie beispielsweise ein Netz von der unter der Bezeichnung GSM bekannten Art, wobei diese Schnittstellen (1, 1') zu der festen Basisstation (2) des lokalen drahtlosen Telefonnetzes (5) gehören.

5. Verfahren nach einem beliebigen der Ansprüche 1 bis 3, **dadurch gekennzeichnet, dass** die zwei Schnittstellen (1 und 1') aus Funkschnittstellen bestehen, die zu einer Kommunikationsvorrichtung gehören, welche auch einen Controller (3") für Übertragungs-/Empfangs-Zentralen oder Basisstationen (3''') eines Funkkommunikationsnetzes umfasst, welches über ein gegebenes Gebiet verteilte feste Basisstationen (3''') und eine Vielzahl von Mobilstationen (3'), beispielsweise Mobiltelefone, umfasst.

6. Kommunikationsvorrichtung, in die mindestens zwei unterschiedliche Übertragungs- / Empfangs-Schnittstellen (1, 1') integriert sind, wobei die zwei Schnittstellen (1, 1') zumindest für von Benutzern genutzte Informationsdaten oder Nutzdaten ähnliche Protokolle und Übertragungsstrukturen und insbesondere Formate verwenden und für ein bestimmtes ankommendes Signal entgegengesetzte Sequenzen von Verarbeitungsschritten ausführen, wobei die eine der Schnittstellen (1, 1') die modulierten Daten in Basisbanddaten umwandelt und die andere diese Basisbanddaten in modulierte Daten umwandelt und umgekehrt, wobei die Vorrichtung **dadurch gekennzeichnet ist, dass** die Übertragung der Informationssignale zwischen den zwei Schnittstellen (1 und 1') nach dem Verfahren gemäß einem beliebigen der Ansprüche 1 bis 5 ausgeführt wird.

7. Kommunikationsvorrichtung nach Anspruch 6, **dadurch gekennzeichnet, dass** die zwei Schnittstellen (1 und 1') aus Funkschnittstellen bestehen, die die Übertragung zwischen den Stationen (3, 3') eines selben Netzes oder zwischen den Stationen (4, 4') von zwei unterschiedlichen Netzen (5, 6) sicherstellen.

8. Kommunikationsvorrichtung nach Anspruch 7, **dadurch gekennzeichnet, dass** sie einen Controller (3") für Übertragungs-/Empfangs-Zentralen oder Basisstationen umfasst, der mindestens zwei Basisstationen (3''') eines zellularen Funkkommunikationsnetzes steuert, welches über ein gegebenes Gebiet verteilte feste Basisstationen (3''') und eine Vielzahl von mobilen Stationen (3'), beispielsweise Mobiltelefonen, umfasst.

9. Kommunikationsvorrichtung nach Anspruch 7, **dadurch gekennzeichnet, dass** sie aus einer festen Basisstation (2) eines lokalen drahtlosen Tetefonnetzes (5), beispielsweise von der unter der Bezeichnung CTS bekannten Art, besteht, wobei die eine der Schnittstellen (1) die Verbindung zu der oder den Mobilstation(en) (4) des lokalen Netzes (5) sicherstellt und die andere Schnittstelle (1') die Verbindung zu einer oder mehreren festen oder mobilen Station(en) (4') eines zellularen Telekommunikationsnetzes (6), beispielsweise von der unter der Bezeichnung GSM bekannten Art, sicherstellt.

## Claims

1. Method of transferring and processing information-bearing signals between two separate send/receive interfaces (1, 1') forming part of the same communication device, the two interfaces (1, 1') using, at least for information-bearing data useful to the users, also referred to as user data, protocols and transmission structures, and in particular formats, that are similar, and carrying out, for a particular incoming signal, opposite sequences of processing operations, one of the interfaces (1, 1') converting modulated data into baseband data and the other converting baseband data into Modulated data, or vice-versa, **characterised in that** it consists in:
- differentiating the user data and the signalling data;
- applying all the processing operations to the signalling data to enable interpretation thereof by each of the interfaces (1 or 1');
- applying to the user data only the processing operations necessary for their transfer from a first interface (1 or 1') to the second interface (1' or 1) without restoration or reconstitution nor interpretation of their content.

2. Method according to claim 1, **characterised in that**, if the following two sequences
i) and ii) of processing operations are applied to the signalling data.
i) demodulation/demultiplexing of bursts/decomposition of bursts/decrypting, where applicable, /de-interleaving of the data/channel decoding of the data/source decoding,
ii) source coding/channel coding/interleaving of the coded data/encryption (where applicable)/composition of bursts/multiplexing of bursts/modulation,
only the following restricted series iii) and iiii) of processing operations are applied to the user data by the interfaces 1 and 1' concerned
iii) demodulation/demultiplexing of bursts/decomposition of bursts/decryption (where applicable),
iiii) encryption (where applicable)/composition of bursts/multiplexing of bursts/modulation.

3. Method according to claim 2, **characterised in that** the application of the restricted series of processing operations to the user data is a function of the activated or deactivated state of a communication function necessitating specific additional operations on the user data restored or reconstituted.

4. Method according to any one of claims 1 to 3, **characterised in that** the two interfaces (1 and 1') consist of radio interfaces, one being a radio interface for a wireless telephone local network (5) and the other being a radio interface for a cellular telecommunication network (6) for stations/mobiles (4), for example a GSM network, said interfaces (1, 1') forming part of the fixed base station (2) of the wireless telephone local network (5).

5. Method according to any one of claims 1 to 3, **characterised in that** the two interfaces (1 and 1') consist of radio interfaces forming part of a communication device also comprising a controller (3") of transceiver centres or base stations (3'") of a radio communication network comprising fixed base stations (3''') distributed over a given territory and a plurality of mobile stations (3'), such as cellular telephones.

6. Communication device integrating at least two distinct send/receive interfaces (1, 1'), said two interfaces (1, 1') using, at least for information-bearing data useful to users, also referred to as user data, transmission protocols and structures, and in particular formats, that are similar and carrying out, for a particular incoming signal, opposite sequences of processing operations, one of the interfaces (1, 1') converting modulated data into baseband data and the other converting baseband data into modulated data, or vice-versa, which device is **characterised in that** the transfer of the information-bearing signals between the two interfaces (1 and 1') is effected by the method according to any one of claims 1 to 5.

7. Communication device according to claim 6, **characterised in that** the two interfaces (1 and 1') consist in radio interfaces providing transmission between stations (3, 3') of the same network or between stations (4, 4') of two different networks (5, 6).

8. Communication device according to claim 7, **characterised in that** it comprises a controller (3") of transceiver centres or base stations, controlling at least two base stations (3''') of a cellular radio communication network comprising fixed base stations (3''') distributed over a given territory and a plurality of mobile stations (3'), such as cellular telephones.

9. Communication device according to claim 7, **characterised in that** it consists in a fixed base station (2) of a wireless telephone local network (5), for example a CTS network, one of the interfaces (1) providing the link to the mobile station or stations (4) of said local network (5) and the other interface (1') providing the link with one or more fixed or mobile stations (4') of a cellular telecommunication network (6), such as a GSM network, for example.
